(19) **Europäisches Patentamt / European Patent Office / Office européen des brevets**

(11) **EP 2 558 274 B1**

(12) **FASCICULE DE BREVET EUROPEEN**

(45) Date de publication et mention
de la délivrance du brevet:
**20.08.2014 Bulletin 2014/34**

(21) Numéro de dépôt: **11715966.5**

(22) Date de dépôt: **22.03.2011**

(51) Int Cl.:
*B29C 53/58* (2006.01)     *B32B 27/30* (2006.01)
*B32B 27/32* (2006.01)     *B32B 37/00* (2006.01)
*B32B 1/08* (2006.01)      *F16L 55/00* (2006.01)
*F16L 1/20* (2006.01)      *F16L 9/12* (2006.01)
*F16L 9/128* (2006.01)     *F16L 53/00* (2006.01)
*F17D 1/18* (2006.01)      *B32B 27/34* (2006.01)
*H05B 3/14* (2006.01)

(86) Numéro de dépôt international:
**PCT/FR2011/050598**

(87) Numéro de publication internationale:
**WO 2011/128544 (20.10.2011 Gazette 2011/42)**

(54) **CONDUITE POUR LE TRANSPORT D'UN FLUIDE COMPRENANT UN HYDROCARBURE, ET PROCEDE DE FABRICATION D'UNE TELLE CONDUITE**

LEITUNG ZUM TRANSPORT EINER FLÜSSIGKEIT MIT EINEM KOHLENWASSERSTOFF UND VERFAHREN ZUR HERSTELLUNG SOLCH EINER LEITUNG

LINE FOR TRANSPORTING A FLUID CONTAINING A HYDROCARBON, AND METHOD FOR PRODUCING SUCH A LINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.04.2010 FR 1052842**

(43) Date de publication de la demande:
**20.02.2013 Bulletin 2013/08**

(73) Titulaire: **Total S.A.
92400 Courbevoie (FR)**

(72) Inventeurs:
• **BIGEX, Thibaud
64000 Pau (FR)**
• **WOIRIN, Jérome
64000 Pau (FR)**

(74) Mandataire: **Cabinet Plasseraud
52, rue de la Victoire
75440 Paris Cedex 09 (FR)**

(56) Documents cités:
EP-A2- 1 912 006     WO-A2-01/42338
CN-Y- 2 475 967      CN-Y- 2 800 021
CN-Y- 201 191 920    CN-Y- 201 354 918
FR-A1- 2 913 364

**Description**

La présente invention est relative aux conduites pour le transport d'un fluide comprenant un hydrocarbure.

De telles conduites sont maintenant couramment utilisées dans des environnements très froid, à terre comme en mer, et parfois en mer à de très grande profondeur. Dans ces conditions le fluide peut soit se congeler, soit se coaguler, soit présenter la formation de paraffine. Ces transformations du fluide peuvent générer des bouchons et entraver le transport du fluide dans la conduite. C'est pourquoi ces conduites sont parfois chauffées pour éviter ces inconvénients. Une technique connue est le chauffage électrique de ces conduites par des lignes conductrices en cuivre placées sur les tubes.

Le document CN2800021-Y, qui dévoile le préambule de la revendication 1, décrit une telle conduite pour le transport d'un hydrocarbure, ayant un tube en plastique renforcé par des fibres de verre, une première couche en fibre de carbone, et une deuxième couche en plastique renforcée par des fibres de verre. La première couche peut être alimentée électriquement pour réchauffer le tube.

Ces conduites utilisant des fibres de carbone comme conducteur électrique permettent de chauffer le fluide plus efficacement et de manière plus homogène que les lignes conductrices en cuivre.

La présente invention a pour but de perfectionner ce dernier type de conduites. On cherche notamment à améliorer leur résistance mécanique.

Une conduite pour le transport d'un fluide comprenant un hydrocarbure selon un mode de réalisation de l'invention comprend :

- un tube creux s'étendant selon une direction longitudinale et destiné à transporter ledit fluide dans le tube, ledit tube ayant au moins une surface externe électriquement isolante,
- une couche de chauffage sur le tube, et comprenant des fibres de carbone noyées dans un matériau polymère,
- une couche d'isolation électrique sur la couche de chauffage comprenant un matériau électriquement isolant,
- une couche de renfort sur la couche d'isolation électrique, et comprenant une charge de renfort noyée dans un matériau polymère, ladite couche de renfort étant adaptée pour rigidifier la conduite, ladite charge de renfort comprenant des fibres de carbone, et
- des moyens d'alimentation électrique destinés à amener un courant électrique à ladite couche de chauffage, ledit courant électrique circulant dans ladite couche de chauffage pour chauffer le tube.

Grâce à ces dispositions, notamment par le fait d'utiliser une charge de renfort comprenant des fibres de carbone, la couche de renfort a une résistance mécanique plus élevée que la deuxième couche de l'art antérieur. Elle permet par exemple de résister à des efforts de pression externe très important, par exemple supérieur à 200 bars, de sorte qu'une telle conduite est utilisable en offshore à grande profondeur.

En outre, une conduite de ce type est plus légère, ce qui permet de la transporter et de la mettre en oeuvre plus facilement.

Dans divers modes de réalisation de la conduite selon l'invention, on peut éventuellement avoir recours en outre à l'une et/ou à l'autre des dispositions suivantes :

- les fibres de carbone de la couche de chauffage sont enroulées autour du tube avec un premier angle prédéterminé adapté pour obtenir une résistance électrique de ladite couche de chauffage, et
- les fibres de carbone de la couche de renfort sont enroulées autour du tube avec au moins un deuxième angle prédéterminé adapté pour obtenir une résistance mécanique de ladite couche de renfort ;

la conduite comprend en outre des moyens d'assemblage à chaque extrémité du tube destinés à solidariser la conduite avec un autre dispositif, tel qu'une autre conduite, ledit autre dispositif comprenant des moyens d'assemblage complémentaire, lesdits moyens d'assemblage étant rigidement liés à la couche de renfort et étant adaptés pour maintenir les moyens d'alimentation de la couche de chauffage ;

- le matériau électriquement isolant de la couche d'isolation électrique comprend des fibres de verre ou des fibres de kevlar, noyées dans un matériau polymère ;
- les moyens d'alimentation électrique comprennent un élément de connexion venant en contact avec une surface transversale située à une extrémité de la couche de chauffage dans la direction longitudinale ;
- les moyens d'alimentation électrique comprennent un élément de connexion ayant une forme annulaire dans une section transversale et une forme en biseau dans une section longitudinale, ledit élément de connexion étant monté dans une gorge de la couche de chauffage, ladite gorge ayant une forme complémentaire à celle de l'élément de connexion ;
- les moyens d'alimentation électrique comprennent au moins un dispositif récepteur connecté à la couche de chauffage et adapté pour recevoir un champ magnétique d'induction et pour générer le courant électrique dans la couche de chauffage, ledit champ magnétique d'induction étant émis par un dispositif émetteur situé à distance de la couche de chauffage ;
- la conduite comprend en outre au moins un capteur de température destiné à être connecté à des moyens de contrôle pour réguler le courant électrique dans la couche de chauffage ;

- le capteur de température comprend une fibre optique adaptée pour mesurer au moins un profil de température le long de la conduite dans la direction longitudinale ;
- le tube est en matériau polymère et la fibre optique est noyée dans le tube.

L'invention est également relative à un procédé de fabrication d'une conduite pour le transport d'un fluide comprenant un hydrocarbure, ladite conduite comprenant un tube creux s'étendant selon une direction longitudinale et destiné à transporter ledit fluide dans le tube, ledit tube ayant au moins une surface externe électriquement isolante, ledit procédé comprenant au moins les étapes successives suivante :

- formation d'une couche de chauffage sur le tube, ladite couche de chauffage comprenant des fibres de carbone noyées dans un matériau polymère,
- formation d'une couche d'isolation électrique sur la couche de chauffage, ladite couche d'isolation électrique comprenant un matériau électriquement isolant,
- formation d'une couche de renfort sur la couche d'isolation électrique, ladite couche de renfort comprenant une charge de renfort noyée dans un matériau polymère, ladite couche de renfort étant adaptée pour rigidifier la conduite, ladite charge de renfort comprenant des fibres de carbone, et
- mise en place des moyens d'alimentation électrique destinés à amener un courant électrique à ladite couche de chauffage, ledit courant électrique circulant dans ladite couche de chauffage pour chauffer le tube.

Dans divers modes de réalisation du procédé de fabrication de la conduite selon l'invention, on peut éventuellement avoir recours en outre à l'une et/ou à l'autre des dispositions suivantes :

- la formation de chaque couche est réalisée par :

  - application d'au moins une bande de composite appropriée en spirale autour de la couche précédente, et
  - chauffage de cette bande pendant un temps prédéterminé pour fondre partiellement le matériau polymère de la bande pour que celle-ci adhère à la couche précédente ;

- on usine la conduite formée pour réaliser une gorge ayant un fond en forme de biseau dans la couche de chauffage, ladite gorge étant adaptée pour accueillir au moins un élément de connexion de forme complémentaire.

D'autres caractéristiques et avantages de l'invention apparaîtront au cours de la description suivante d'un de ses modes de réalisation, donné à titre d'exemple non limitatif, en regard des dessins joints.
Sur les dessins :

- la figure 1a est une vue en coupe longitudinale d'une conduite selon l'invention,
- la figure 1b est une vue transversale de coté de la conduite de la figure 1a,
- la figure 2 est une vue agrandie d'un variante de la couche de chauffage de la conduite de la figure 1,
- la figure 3 est une vue en coupe longitudinale d'une extrémité de la conduite de la figure 1 et montrant les moyens d'alimentation et d'assemblage, et
- la figure 4 est une vue agrandie d'une variante des moyens d'alimentation de la conduite de la figure 1.

Sur les différentes figures, les mêmes références désignent des éléments identiques ou similaires.
La direction longitudinale mentionnée dans cette description doit s'entendre comme la direction allant dans la direction X désignée sur les figures. Une direction transversale mentionnée dans cette description doit s'entendre comme la direction Y ou Z désignée sur les figures. Ces directions ne sont mentionnées que pour aider la lecture et la compréhension de l'invention.
Le terme « conduite » de la présente invention doit être compris comme étant un dispositif comprenant un tube pour transporter un fluide au moins entre une entrée et une sortie, le dispositif pouvant comporter d'autres éléments, tel qu'une vanne, ou des dérivations multiples.

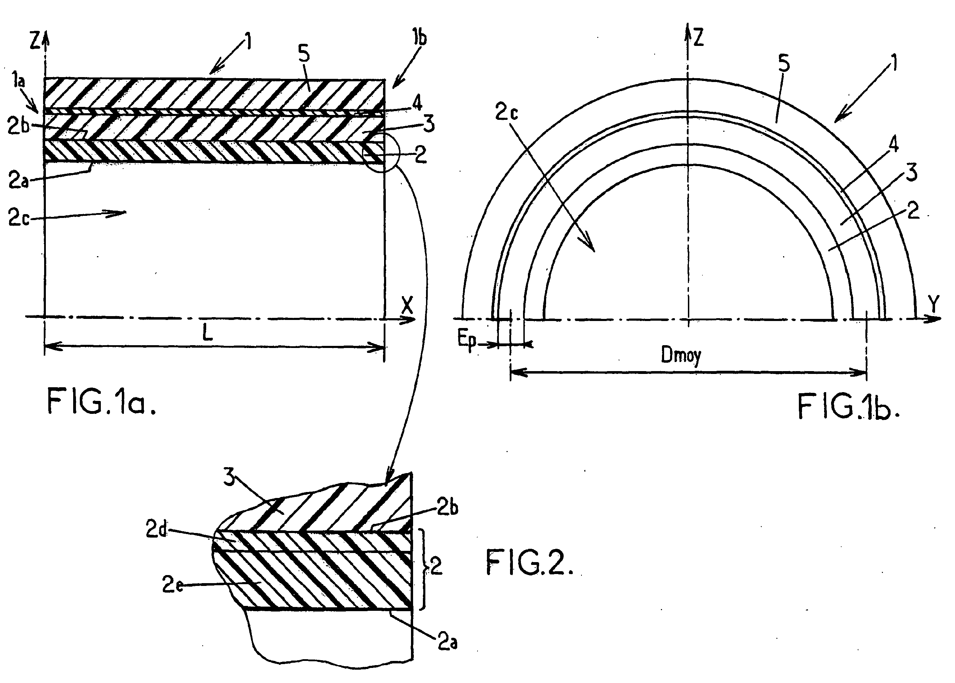

Les figures 1a et 1b présentent une conduite 1 selon l'invention en coupe longitudinale selon un plan XZ et en coupe transversale selon un plan YZ. Dans ces figures seul une moitié supérieure au dessus de l'axe X est présentée, l'autre moitié inférieure étant sensiblement identique par symétrie par rapport à l'axe X.
La conduite 1 comprend un tube 2 creux, s'étendant dans la direction longitudinale d'axe X entre une première et deuxième extrémité (1a, 1b) de la conduite. Ce tube 2 comprend une surface interne 2a à proximité de l'axe X, et une surface externe 2b plus éloignée de l'axe X. A l'intérieur de la surface interne 2a s'étend une cavité 2c entre une entrée et une sortie de la cavité situées à chacune des extrémités. La cavité 2c est adapté pour transporter le fluide entre lesdites entrée et sortie.
La figure 1b montre que la conduite 1 a une forme sensiblement cylindrique, mais d'autres formes pourraient être réalisées.
Le tube 2 peut être réalisé avec un matériau électriquement isolant, par exemple un polymère. Ce matériau peut avantageusement être un polyamide (PA), ou un polyfluorure de vinylidène (PVDF).
Ce tube 2 peut également être réalisé avec un matériau électriquement conducteur, tel que de l'acier. Dans ce cas, il comprendra au moins à sa surface externe 2b une couche d'isolation électrique 2d visible en figure 2, par exemple constituée d'un des polymères cités ci-dessus, ou d'un composite comprenant des fibres de verre ou de kevlar noyées dans un matériau polymère du même type que cité ci-dessus. Cette couche d'isolation électrique 2d a une épaisseur dans une direction transversale, par exemple comprise entre 0,5 mm et 10 mm, notamment en fonction de la tension d'alimentation $V$ de la couche de chauffage 3.

Sur ce tube 2 de la conduite 1, on applique au moins les couches suivantes :

- une couche de chauffage 3,
- une couche d'isolation électrique 4, et
- une couche de renfort 5.

La couche de chauffage 3 est un composite comprenant au moins des fibres de carbone noyées dans un polymère. Ce polymère peut avantageusement être un polyamide (PA), ou un polyfluorure de vinylidène (PVDF).

Les fibres de carbone sont aptes à conduire un courant électrique pour chauffer le tube par effet Joule. La résistance électrique $R$ d'une telle couche de chauffage 3 entre les première et deuxième extrémités (1a, 1b) de la conduite peut être calculée de manière approchée par la formule suivante :

$$R = \rho_{fibre} \cdot \frac{L}{\pi \cdot D_{moy} \cdot cos^2 \alpha \cdot E_p}$$

dans laquelle :

- $\rho_{fibre}$ est une résistivité des fibres de carbone, ayant par exemple pour valeur $\rho_{fibre} = 1,9.10^{-5}\ \Omega.m$ à une température de 20°C, ce qui est sensiblement 1100 fois plus résistif que le cuivre à 20°C,
- $L$ est une longueur de la couche de chauffage 3 entre les première et deuxième extrémités (1a, 1b) selon la direction longitudinale X,
- $D_{moy}$ est un diamètre moyen de la couche de chauffage 3,
- $E_p$ est une épaisseur de la couche de chauffage dans une direction transversale, et
- $\alpha$ est un angle d'inclinaison que forment les fibres de carbone par rapport à la direction de l'axe X.

L'épaisseur $E_p$ et l'angle d'inclinaison $\alpha$ permettent, lors du dimensionnement, de définir la résistance électrique de cette couche de chauffage 3, et par conséquent la puissance électrique $P$ consommée servant à chauffer le tube 2. Cette puissance électrique $P$ est égale à $P = V^2/R,$ où $V$ est une tension électrique d'alimentation de ladite couche de chauffage 3 entre les première et deuxième extrémités.

L'angle d'inclinaison $\alpha$ peut prendre toute valeur entre 0 degré et 70 degrés. Cependant, pour des raisons de facilités de fabrication et des raisons de risques de délaminage du composite avec une valeur d'angle d'inclinaison faible lors de la flexion de la conduite 1 (par exemple lors de la pose sur le fond marin), cet angle d'inclinaison $\alpha$ sera avantageusement supérieur à 10 degrés.

Pour une plage d'angle d'inclinaison comprise entre 10 degrés et 70 degrés, le coefficient $cos^2\alpha$ varie sensiblement entre 0,12 et 0,97, ce qui signifie que la résistance électrique $R$ de la couche de chauffage 3 peut varier sur une très grande plage en définissant uniquement cet angle d'inclinaison $\alpha$ des fibres de carbone.

La couche de chauffage 3 peut être fabriquée par des moyens connus du type présentés dans la publication FR-2 873 952, en utilisant des bandes préformées de composite, chaque bande s'étendant selon une direction principale et comprenant des fibres de carbone noyées dans un polymère, lesdites fibres de carbone étant orientées sensiblement selon ladite direction principale de la bande préformée.

La couche de chauffage 3 peut être réalisée par un empilement de sous-couches, chaque sous-couche comprenant des fibres de carbone inclinées avec un angle d'inclinaison $\alpha_i$ prédéterminé par rapport à la direction longitudinale X. Chaque sous-couche comprend alors des fibres de carbone avec un angle d'inclinaison différent de la sous-couche voisine. Par exemple, chaque sous-couche est formée à l'aide de bandes préformées, tel que explicité ci-dessus. En variante, deux sous-couches successives peuvent avoir des angles d'inclinaison opposés pour former un quadrillage sous forme de losanges vu d'une surface externe de la couche de chauffage 3.

Chaque sous-couche d'indice $i$, a un angle d'inclinaison $\alpha_i$, une épaisseur $E_{pi}$, un diamètre moyen $D_{moyi}$, et possède une résistance électrique élémentaire $R_i$. La résistance électrique élémentaire $R_i$ de chaque sous-couche d'indice $i$ peut être calculé par la formule précédente de calcul d'une couche ayant des fibres de carbone selon un seul angle d'inclinaison. La résistance électrique $R$ de la couche de chauffage 3 peut alors être calculée par la mise en parallèle des résistances élémentaires $R_i$ de chaque sous-couche, c'est-à-dire par

$$1/R = \sum_i 1/R_i \ .$$

Grâce à l'angle d'inclinaison des fibres de carbone dans la couche de chauffage 3, on peut obtenir une résistance électrique $R$ désirée pour le chauffage.

Grâce à cette couche de chauffage 3 comprenant des fibres de carbone bien réparties dans le matériau polymère de cette couche, le chauffage est plus homogène autour du tube 2. En outre, si une ou plusieurs fibres de carbone étaient rompues à un endroit de la conduite, le courant électrique continue à passer. De plus, si on utilise une pluralité de sous-couches avec des angles différents, les fibres de carbone se croisent et sont au moins partiellement en contact mutuel, de sorte que le courant électrique et le chauffage reste homogène dans la couche de chauffage 3. Seule la zone où les fibres sont rompues est alors affectée. Une telle conduite 1 est donc très tolérante aux défauts de fabrication et aux accidents de manipulation pouvant la détériorer localement.

La couche d'isolation électrique 4 est électriquement isolante. Elle est par exemple constituée d'un composite comprenant des fibres de verre noyées dans un polymère. Le polymère est avantageusement adapté pour bien adhérer à la couche précédente, la couche de chauffage 3. Il est éventuellement identique au polymère utilisé dans cette couche de chauffage 3.

La couche d'isolation électrique 4 doit avoir une épaisseur suffisante pour éviter toute perte de courant électrique de la couche de chauffage 3, même lorsque la conduite 1 est déformée ou coudée. Cette couche d'isolation électrique 4 a une épaisseur dans une direction transversale, par exemple comprise entre 0,5 mm et 10 mm, notamment en fonction de la tension d'alimentation $V$ de la couche de chauffage 3.

La couche de renfort 5 est un composite comprenant au moins une charge de renfort noyée dans un polymère, la charge de renfort comprenant au moins des fibres de carbone et le polymère. Le polymère est avantageusement adapté pour adhérer à la couche précédente, la couche d'isolation électrique 4. Il est avantageux d'utiliser le même polymère pour les trois couches : couche de chauffage 3, couche d'isolation électrique 4, et couche de renfort 5. Le tube 2 est en outre avantageusement réalisé avec ce même polymère. La conduite 1 est un composite multicouche comprenant un polymère tel qu'un polyamide (PA) ou un polyfluorure de vinylidène (PVDF). On peut alors réaliser de très grande longueur d'une telle conduite de manière complètement automatisée. Grâce à cette disposition, le coût d'une telle conduite est faible, même si elle comprend un matériau couteux tel que de la fibre de carbone.

L'utilisation d'une charge de renfort en fibre de carbone présente cependant au moins deux inconvénients incitant un homme du métier à ne pas l'utiliser : Elle est plus onéreuse qu'une fibre de verre ; et elle est conductrice de l'électricité, ce qui impose l'utilisation d'au moins une couche d'isolation électrique 4 entre la couche de chauffage 3 et la couche de renfort 5, et complique ainsi la réalisation de la conduite.

Cependant, les fibres de carbone sont plus résistantes que les fibres de verre, de sorte que la quantité de fibres de carbone nécessaire pour obtenir une même résistance mécanique est inférieure. Par conséquent, le surcoût pour le produit lié au matériau est inférieur à celui du matériau lui-même, et la conduite 1 réalisée a un encombrement ou diamètre externe inférieur.

La couche de renfort 5 peut être fabriquée avec la même technique que pour la couche de chauffage 3. Elle pourra comprendre une pluralité de sous-couches, chaque sous-couche comprenant des fibres de carbone inclinées selon un angle d'inclinaison prédéterminé. En outre, chaque sous-couche peut être formée à l'aide de bandes préformées. Additionnellement, l'angle d'inclinaison d'une sous-couche est de valeur opposée à l'angle d'inclinaison d'une sous-couche voisine ou adjacente. L'angle d'inclinaison de ces sous-couches est alors avantageusement compris entre 20 degré et 70 degrés.

Grâce à la couche de renfort 5, la conduite 1 est très rigide, notamment elle peut supporter une pression externe très élevée, par exemple supérieure à 100 bars et de préférence supérieure à 200 bars. Pour obtenir, une meilleure résistance à la pression externe, l'angle d'inclinaison sera avantageusement compris entre 60 et 70 degrés, et préférentiellement proche de 65 degrés. La couche de renfort 5 est alors plus rigide que le tube 2, et confère à la conduite 1 sa grande rigidité.

Grâce à la couche de renfort 5, la conduite 1 résiste également à dés efforts de compression très élevés. Pour obtenir, une meilleure résistance à la compression ou de traction dans la direction longitudinale X, l'angle d'inclinaison sera avantageusement compris entre 20 et 30 degrés, et préférentiellement proche de 25 degrés.

La conduite 1 résiste également à des efforts de flexion très élevés. Elle peut être enroulée avec un faible rayon de courbure par exemple inférieur à 20 m, et préférentiellement inférieur à 10 m. Un angle d'inclinaison compris entre 50 et 70 degrés sera préféré pour obtenir un rayon de courbure faible. Elle peut alors être utilisée par grand fond marin sans risque pas d'être détériorée lors de sa pose, que cela soit par une technique dite de pose en « S » ou une technique dite de pose en « J », pour lesquelles la conduite forme un ou plusieurs coudes avant de reposer sur le fond marin.

Grâce à l'angle d'inclinaison des fibres de carbone dans la couche de renfort 5, on peut obtenir une résistance mécanique désirée pour la conduite, en pression, en compression ou traction longitudinale, ou en flexion.

Grâce à cette couche de renfort 5 très rigide, le tube 2 peut avoir une épaisseur faible et être réalisé avec un matériau moins rigide que la couche de renfort 5, c'est-à-dire seulement apte à supporter la fabrication des couches successives sur ledit tube et non les contraintes de la pression externe à la conduite 1. La couche de chauffage 3 est alors à une distance faible de la surface interne 2a du tube 2 et le chauffage du fluide transporté est plus efficace. De plus, puissance nécessaire pour chauffer le fluide est plus faible.

Par exemple, un tube de 6 pouces de diamètre (approximativement 15 cm de diamètre), comprenant 54 couches de fibres de carbone noyées dans un polymère Polyamide PA11 avec des premières sous-couches ayant des angles d'inclinaison à +/- 25 degrés, puis des deuxièmes sous-couches ayant des angles de +/- 65 degrés, ces sous-couches représentant une épaisseur de 15 mm, a les caractéristiques mécaniques suivantes : résistance à une pression externe de 245 bar, résistance à une pression interne du fluide de 1500 bar, et résistance à la traction de 550 tonnes.

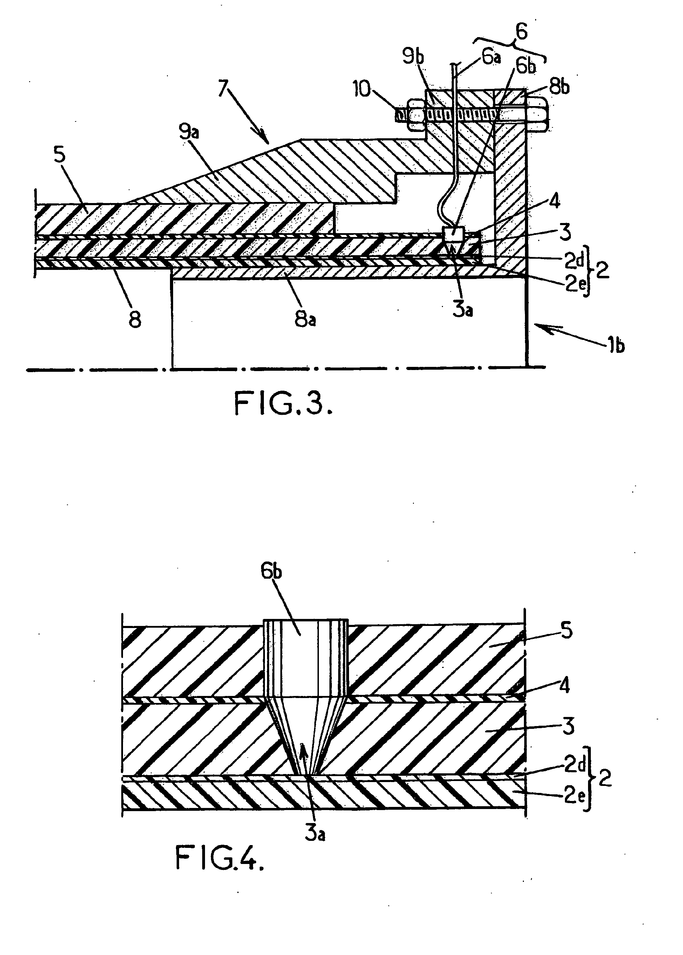

La figure 3 montre un mode de réalisation d'une extrémité 1b de la conduite 1 selon l'invention comprenant :

- des moyens d'alimentation électrique 6 de la couche de chauffage 3 destinés à amener le courant électrique à la couche de chauffage 3, et
- des moyens d'assemblage mécanique 7 de la conduite destinés à la solidariser avec un autre dispositif ou une autre conduite comprenant des moyens d'assemblage identiques ou complémentaires.

Chaque extrémité 1a, 1b de la conduite 1 comprend un moyen d'alimentation électrique, de telle sorte que une tension **V** appliquée entre ces deux moyens d'alimentation électrique fait circuler un courant électrique **I** dans la couche de chauffage 3. Par la loi d'Ohm, on a : **I = V/R.**

Les moyens d'alimentation électriques 6 représentés comprennent un câble 6a en relation avec l'extérieur de la conduite 1, et un élément de connexion 6b venant en contact avec les fibres de carbone de la couche de chauffage 3 et connecté audit câble 6a.

Selon une première variante, non représentée, l'élément de connexion 6b est en contact avec les fibres de carbone de la couche de chauffage 3 selon une surface de contact transversale de ladite couche de chauffage 3, ladite surface de contact étant sensiblement perpendiculaire à la direction longitudinale X et située à une extrémité longitudinale de ladite couche de chauffage 3. Cette surface de contact est sensiblement annulaire.

Selon une deuxième variante, représentée en figure 3, l'élément de connexion 6b a une forme en biseau dans une section longitudinale, et pénètre dans une gorge 3a de la couche de chauffage 3 pour venir en contact avec les fibres de carbone de la couche de chauffage 3 selon une surface de contact dans ladite gorge 3a. L'élément de connexion 6b et la gorge 3a ont une forme annulaire autour de l'axe longitudinale X.

Grâce à cette disposition, la surface de contact entre l'élément de connexion 6b et la couche de chauffage 3 est augmentée.

Selon une troisième variante, pour laquelle la figure 4 montre une vue agrandie, la gorge 3a traverse la couche de renfort 5, la couche d'isolation électrique 4 et la couche de chauffage 3. L'élément de connexion 6b est isolé électriquement de la couche de renfort 5 par un revêtement pour éviter toute perte de courant électrique dans cette couche de renfort 5. Une extrémité de l'élément de connexion 6b a une forme en biseau comme dans la précédente variante pour venir en contact avec les fibres de carbone de la couche de chauffage 3.

Selon une quatrième variante, non représentée, les moyens d'alimentation électrique 6 comprennent au moins un dispositif récepteur connecté à la couche de chauffage 3 et adapté pour recevoir un champ magnétique d'induction et pour générer le courant électrique. Le champ magnétique d'induction est émis par un dispositif émetteur situé à distance de cette couche de chauffage.

Grâce à cette disposition, l'énergie est transmise sans contact depuis l'extérieur de la conduite 1 vers la couche de chauffage 3. Le câble 6a des précédentes variantes qui traverse transversalement la conduite 1 entre l'extérieur et la couche de chauffage est supprimé. L'étanchéité des moyens d'alimentation 6 et des moyens d'assemblage 7 est simplifiée.

Des moyens d'assemblage 7 sont représentés en figure 3. Ces moyens d'assemblage 7 comprennent par exemple :

- un premier organe 8 solidaire du tube 2, comprenant par exemple une portion longitudinale 8a fixée au tube 2 s'étendant selon la direction longitudinale X, puis une portion radiale 8b s'étendant vers l'extérieur, et
- un deuxième organe 9 comprenant une portion longitudinale 9a montée étanche sur une surface externe de la conduite 1 et une portion radiale fixée sur la portion radiale 8b du premier organe 8 par des moyens de serrage 10, tels que des boulons.

Ces moyens d'assemblage 7 peuvent en outre être adaptés pour maintenir les moyens d'alimentation 6 de la couche de chauffage 3.

La conduite 1 peut comprendre en outre (non représenté) au dessus des précédentes couches décrites :

- une couche d'isolation thermique autour de la couche de renfort 5 et destinée à isoler thermiquement la conduite 1 par rapport à l'extérieur,
- un tube externe rigide entourant cette couche d'isolation thermique, et
- des moyens d'espacement placés entre le tube 2 et le tube externe.

Les moyens d'espacement sont adaptés pour maintenir fixement le tube externe à distance du tube 2 et pour protéger la couche d'isolation thermique d'une pression externe élevée à l'extérieur de la conduite 1.

Le tube externe peut être en acier, ou être un composite comprenant des fibres de carbone et un polymère, tel qu'un polyamide (PA) ou un polyfluorure de vinylidène (PVDF). Le tube externe a alors tous les avantages et toutes les propriétés décrites pour la couche de renfort 5.

Enfin, la conduite 1 peut comprendre un capteur de température destiné à être connecté à des moyens de contrôle pour réguler le courant électrique dans la couche de chauffage 3.

Le capteur de température peut comprendre une fibre optique adaptée pour mesurer un profil de température le long de la conduite 1 dans la direction longitudinale X. Le moyen de contrôle reçoit alors une pluralité de mesures de températures, chaque mesure correspondant à une position différente le long de la conduite 1 dans la direction longitudinale X.

La fibre optique peut être noyée dans un des composites précédents, c'est-à-dire dans la couche de chauffage 3, dans la couche d'isolation électrique 4 ou dans la couche de renfort 5.

Avantageusement, le tube 2 sera en polymère et le capteur de température ou la fibre optique sera noyée dans ce tube 2, de sorte que ce capteur de température mesure au moins une température entre la couche de chauffage 3 et la surface interne 2a du tube 2. Une telle mesure plus proche du fluide donne alors une information plus représentative pour la régulation du moyen de contrôle.

La conduite 1 peut être fabriquée par le procédé suivant.

Ladite conduite comprend un tube 2 creux s'étendant selon une direction longitudinale X et destiné à transporter le fluide dans le tube, ledit tube 2 ayant au moins une surface externe 2a électriquement isolante.

Le procédé comprend au moins les étapes successives suivantes :

- formation d'une couche de chauffage 3 sur le tube 2, ladite couche de chauffage 3 comprenant des fibres de carbone noyées dans un matériau polymère,
- formation d'une couche d'isolation électrique 4 sur la couche de chauffage 3, ladite couche d'isolation électrique 4 comprenant un matériau électriquement isolant,
- formation d'une couche de renfort 5 sur la couche d'isolation électrique 4, ladite couche de renfort 5 comprenant une charge de renfort noyée dans un matériau polymère, ladite couche de renfort 5 étant adaptée pour rigidifier la conduite, ladite charge de renfort comprenant des fibres de carbone, et
- mise en place des moyens d'alimentation électrique 6 destinés à amener un courant électrique à ladite couche de chauffage 3, ledit courant électrique circulant dans ladite couche de chauffage 3 pour chauffer le tube 2.

La formation de chaque couche est réalisée par :

- application d'au moins une bande de composite approprié en spirale autour de la couche précédente, et
- chauffage de cette bande pendant un temps prédéterminé pour fondre partiellement le matériau polymère de la bande pour que celle-ci adhère à la couche précédente.

Eventuellement, on usine la conduite formée pour réaliser une gorge 3a ayant un fond en forme de biseau dans la couche de chauffage 3, ladite gorge 3a étant adaptée pour accueillir au moins un élément de connexion 6b de forme complémentaire.

## Revendications

1. Conduite pour le transport d'un fluide comprenant un hydrocarbure, ladite conduite comprenant :

   - un tube (2) creux s'étendant selon une direction longitudinale (X) et destiné à transporter ledit fluide dans le tube, ledit tube (2) ayant au moins une surface externe (2b) électriquement isolante,
   - une couche de chauffage (3) sur le tube, et comprenant des fibres de carbone noyées dans un matériau polymère,
   - une couche de renfort (5) comprenant une charge de renfort noyée dans un matériau polymère, ladite couche de renfort (5) étant adaptée pour rigidifier la conduite, et
   - des moyens d'alimentation électrique (6) destinés à amener un courant électrique à ladite couche de chauffage (3), ledit courant électrique circulant dans ladite couche de chauffage pour chauffer le tube,

   **caractérisée en ce qu'**elle comprend également

   - une couche d'isolation électrique (4) sur la couche de chauffage (3) comprenant un matériau électriquement isolant, et **en ce que**
   - la couche de renfort (5) est sur la couche d'isolation électrique (4), et **en ce que** ladite charge de renfort de la couche de renfort (5) comprend des fibres de carbone.

2. Conduite selon la revendication 1, dans laquelle :

   - les fibres de carbone de la couche de chauffage (3) sont enroulées autour du tube avec un premier angle prédéterminé adapté pour obtenir une résistance électrique de ladite couche de chauffage, et
   - les fibres de carbone de la couche de renfort (5) sont enroulées autour du tube avec au moins un deuxième angle prédéterminé adapté pour obtenir une résistance mécanique de ladite couche de renfort.

3. Conduite selon la revendication 1 ou la revendication 2, comprenant en outre des moyens d'assemblage (7) à chaque extrémité du tube destinés à solidariser la conduite avec un autre dispositif, tel qu'une autre conduite, ledit autre dispositif comprenant des moyens d'assemblage complémentaire, lesdits moyens d'assemblage (7) étant rigidement liés à la couche de renfort (5) et étant adaptés pour maintenir les moyens d'alimentation (6) de la couche de chauffage (3).

4. Conduite selon la revendication 1, dans laquelle le matériau électriquement isolant de la couche d'isolation électrique (4) comprend des fibres de verre ou des fibres de kevlar, noyées dans un matériau polymère.

5. Conduite selon la revendication 1, dans laquelle les moyens d'alimentation électrique (6) comprennent un élément de connexion (6b) venant en contact avec une surface transversale située à une extrémité de la couche de chauffage (3) dans la direction longitudinale (X).

6. Conduite selon la revendication 1, dans laquelle les moyens d'alimentation électrique (6) comprennent un élément de connexion (6b) ayant une forme annulaire dans une section transversale et une forme en biseau dans une section longitudinale, ledit élément de connexion (6b) étant monté dans une gorge (3a) de la couche de chauffage (3), ladite gorge (3a) ayant une forme complémentaire à celle de l'élément de connexion (6b).

7. Conduite selon la revendication 1, dans laquelle les moyens d'alimentation électrique (6) comprennent au moins un dispositif récepteur connecté à la couche de chauffage (3) et adapté pour recevoir un champ magnétique d'induction et pour générer le courant électrique dans la couche de chauffage (3), ledit champ magnétique d'induction étant émis par un dispositif émetteur situé à distance de la couche de chauffage (3).

8. Conduite selon la revendication 1, comprenant en outre au moins un capteur de température destiné à être connecté à des moyens de contrôle pour réguler le courant électrique dans la couche de chauffage (3).

9. Conduite selon là revendication 8, dans laquelle le capteur de température comprend une fibre optique adaptée pour mesurer au moins un profil de température le long de la conduite dans la direction longitudinale (X).

10. Conduite selon la revendication 9, dans laquelle le tube (2) est en matériau polymère et la fibre optique est noyée dans le tube (2).

11. Procédé de fabrication d'une conduite pour le transport d'un fluide comprenant un hydrocarbure, ladite conduite comprenant un tube (2) creux s'étendant selon une direction longitudinale (X) et destiné à transporter ledit fluide dans le tube, ledit tube (2) ayant au moins une surface externe (2b) électriquement isolante, ledit procédé comprenant au moins les étapes successives suivantes :

- formation d'une couche de chauffage (3) sur le tube, ladite couche de chauffage (3) comprenant des fibres de carbone noyées dans un matériau polymère,
- formation d'une couche d'isolation électrique (4) sur la couche de chauffage (3), ladite couche d'isolation électrique (4) comprenant un matériau électriquement isolant,
- formation d'une couche de renfort (5) sur la couche d'isolation électrique (4), ladite couche de renfort (5) comprenant une charge de renfort noyée dans un matériau polymère, ladite couche de renfort (5) étant adaptée pour rigidifier la conduite, ladite charge de renfort comprenant des fibres de carbone, et
- mise en place des moyens d'alimentation électrique (6) destinés à amener un courant électrique à ladite couche de chauffage (3), ledit courant électrique circulant dans ladite couche de chauffage pour chauffer le tube (2).

12. Procédé selon la revendication 11, dans lequel la formation de chaque couche (3, 4, 5) est réalisée par :

- application d'au moins une bande de composite appropriée en spirale autour de la couche précédente, et
- chauffage de cette bande pendant un temps prédéterminé pour fondre partiellement le matériau polymère de la bande pour que celle-ci adhère à la couche précédente.

13. Procédé selon la revendication 11, dans lequel on usine la conduite formée pour réaliser une gorge (3a) ayant un fond en forme de biseau dans la couche de chauffage (3), ladite gorge (3a) étant adaptée pour accueillir au moins un élément de connexion (6b) de forme complémentaire.

**Patentansprüche**

1. Leitung für den Transport eines Fluids, das einen Kohlenwasserstoff umfasst, wobei die Leitung Folgendes umfasst:

- ein hohles Rohr (2), das sich entlang einer Längsrichtung (X) erstreckt und dazu dient, das Fluid im Rohr zu transportieren, wobei das Rohr (2) zumindest eine elektrisch isolierende Außenfläche (2b) aufweist,
- eine Heizschicht (3) am Rohr, die in ein polymeres Material eingebettete Kohlefasern umfasst,
- eine Verstärkungsschicht (5), die einen in ein polymeres Material eingebetteten Verstärkungsfüllstoff umfasst, wobei die Verstärkungsschicht (5) angepasst ist, die Leitung zu versteifen, und

- Stromversorgungsmittel (6) zur Zuführung eines elektrischen Stroms zur Heizschicht (3), wobei der elektrische Strom in der Heizschicht fließt, um das Rohr zu erhitzen,

**dadurch gekennzeichnet, dass** sie ferner Folgendes umfasst:

- eine elektrisch isolierende Schicht (4) an der Heizschicht (3), die ein elektrisch isolierendes Material umfasst, und **dadurch, dass**
- die Verstärkungsschicht (5) an der elektrisch isolierenden Schicht (4) angeordnet ist und dadurch, dass der Verstärkungsfüllstoff der Verstärkungsschicht (5) Kohlefasern umfasst.

2. Leitung nach Anspruch 1, wobei:

- die Kohlefasern der Heizschicht (3) in einem bestimmten ersten Winkel, der angepasst ist, einen elektrischen Widerstand der Heizschicht zu erhalten, um das Rohr gewickelt sind und
- die Kohlefasern der Verstärkungsschicht (5) in zumindest einem bestimmten zweiten Winkel, der angepasst ist, einen mechanischen Widerstand der Verstärkungsschicht zu erhalten, um das Rohr gewickelt sind.

3. Leitung nach Anspruch 1 oder Anspruch 2, umfassend ferner Verbindungsmittel (7) an jedem Ende des Rohrs zur Verbindung der Leitung mit einer anderen Einrichtung, wie beispielsweise einer anderen Leitung, wobei die andere Einrichtung komplementäre Verbindungsmittel umfasst, wobei die Verbindungsmittel (7) starr mit der Verstärkungsschicht (5) verbunden und angepasst sind, die Versorgungsmittel (6) der Heizschicht (3) zu halten.

4. Leitung nach Anspruch 1, wobei das elektrisch isolierende Material der elektrisch isolierenden Schicht (4) in ein polymeres Material eingebettete Glas- oder Kevlarfasern umfasst.

5. Leitung nach Anspruch 1, wobei die Stromversorgungsmittel (6) ein Verbindungselement (6b) umfassen, das mit einer Querfläche, die sich in der Längsrichtung (X) an einem Ende der Heizschicht (3) befindet, in Kontakt kommt.

6. Leitung nach Anspruch 1, wobei die Stromversorgungsmittel (6) ein Verbindungselement (6b) umfassen, das in einem Querschnitt eine Ringform und in einem Längsschnitt eine abgeschrägte Form aufweist, wobei das Verbindungselement (6b) in einer Kehle (3a) der Heizschicht (3) angebracht ist, wobei die Kehle (3a) eine zur Form der Verbindungselements (6b) komplementäre Form aufweist.

7. Leitung nach Anspruch 1, wobei die Stromversorgungsmittel (6) zumindest eine Empfangseinrichtung umfassen, die mit der Heizschicht (3) verbunden und angepasst ist, ein Induktionsmagnetfeld zu empfangen und den elektrischen Strom in der Heizschicht (3) zu erzeugen, wobei das Induktionsmagnetfeld durch eine Emissionseinrichtung, die sich in einem Abstand zur Heizschicht (3) befindet, emittiert wird.

8. Leitung nach Anspruch 1, umfassend ferner zumindest einen Temperatursensor, der vorgesehen ist, mit Steuerungsmitteln zur Regulierung des elektrischen Stroms in der Heizschicht (3) verbunden zu werden.

9. Leitung nach Anspruch 8, wobei der Temperatursensor eine optische Faser umfasst, die geeignet ist, zumindest ein Temperaturprofil entlang der Leitung in der Längsrichtung (X) zu messen.

10. Leitung nach Anspruch 9, wobei das Rohr (2) aus polymerem Material ist und die optische Faser in das Rohr (2) eingebettet ist.

11. Verfahren zur Herstellung einer Leitung für den Transport eines Fluids, das einen Kohlenwasserstoff umfasst, wobei die Leitung ein hohles Rohr (2) umfasst, das sich entlang einer Längsrichtung (X) erstreckt und dazu dient, das Fluid im Rohr zu transportieren, wobei das Rohr (2) zumindest eine elektrisch isolierende Außenfläche (2b) aufweist, wobei das Verfahren zumindest die folgenden aufeinanderfolgenden Schritte umfasst:

- Ausbildung einer Heizschicht (3) am Rohr, wobei die Heizschicht (3) in ein polymeres Material eingebettete Kohlefasern umfasst,
- Ausbildung einer elektrisch isolierenden Schicht (4) an der Heizschicht (3), wobei die elektrisch isolierende Schicht (4) ein elektrisch isolierendes Material umfasst,
- Ausbildung einer Verstärkungsschicht (5) an der elektrisch isolierenden Schicht (4), wobei die Verstärkungsschicht (5) einen in ein polymeres Material eingebetteten Verstärkungsfüllstoff umfasst, wobei die Verstärkungsschicht (5) angepasst ist, die Leitung zu versteifen, wobei der Verstärkungsfüllstoff Kohlefasern umfasst, und
- Anordnung der Stromversorgungsmittel (6) zur Zuführung eines elektrischen Stroms zur Heizschicht (3), wobei der elektrische Strom in die Heizschicht fließt, um das Rohr (2) zu erhitzen.

12. Verfahren nach Anspruch 11, wobei die Ausbildung jeder Schicht (3, 4, 5) ausgeführt wird durch:

- Anbringung zumindest eines geeigneten Verbundstreifens in einer Spirale um die vorherige Schicht und

- Erhitzung dieses Streifens während einer vorbestimmten Dauer, um das Polymermaterial des Streifens teilweise zu schmelzen, damit dieses an der vorherigen Schicht haftet.

13. Verfahren nach Anspruch 11, wobei die ausgebildete Leitung bearbeitet wird, um eine Kehle (3a) auszuführen, die einen Boden mit abgeschrägter Form in der Heizschicht (3) aufweist, wobei die Kehle (3a) geeignet ist, zumindest ein Verbindungselement (6b) mit komplementärer Form aufzunehmen.

**Claims**

1. Line for transporting a fluid containing a hydrocarbon, said line comprising:

    - a hollow tube (2) extending in a longitudinal direction (X) and intended for transporting said fluid in the tube, said tube (2) having at least one electrically insulating outer surface (2b),
    - a heating layer (3) on the tube, and comprising carbon fibers embedded in a polymer material,
    - a reinforcing layer (5) comprising a reinforcing filler embedded in a polymer material, said reinforcing layer (5) being suitable to stiffen the line, and
    - electrical power supply means (6) intended to bring an electrical current to said heating layer (3), said electrical current flowing in said heating layer in order to heat the tube, **characterized in that** it further comprises:

        - an electrically insulating layer (4) on the heating layer (3), comprising an electrically insulating material, and **in that**
        - the reinforcing layer (5) is on the electrically insulating layer (4), and **in that** said reinforcing filler of the reinforcing layer (5) comprises carbon fibers.

2. Line according to Claim 1, wherein:

    - the carbon fibers of the heating layer (3) are wound around the tube with a first predetermined angle suitable to obtain an electrical resistance of said heating layer, and
    - the carbon fibers of the reinforcing layer (5) are wound around the tube with at least a second predetermined angle suitable to obtain a mechanical strength of said reinforcing layer.

3. Line according to Claim 1 or Claim 2, further comprising assembly means (7) at each end of the tube intended for securing the line to another device, such as another line, said other device comprising complementary assembly means, said assembly means (7) being rigidly connected to the reinforcing layer (5) and being suitable for holding the power supply means (6) of the heating layer (3).

4. Line according to Claim 1, wherein the electrically insulating material of the electrically insulating layer (4) comprises fiberglass or Kevlar fibers, embedded in a polymer material.

5. Line according to Claim 1, wherein the electrical power supply means (6) comprise a connection element (6b) coming into contact with a transverse surface located at one end of the heating layer (3) in the longitudinal direction (X).

6. Line according to Claim 1, wherein the electrical power supply means (6) comprise a connection element (6b) having an annular shape in a transverse cross-section and a bevelled shape in a longitudinal cross-section, said connection element (6b) being mounted in a groove (3a) of the heating layer (3), said groove (3a) having a shape complementary to that of the connection element (6b).

7. Line according to Claim 1, wherein the electrical power supply means (6) comprise at least one receiving device connected to the heating layer (3) and suitable for receiving a magnetic induction field and for generating the electrical current in the heating layer (3), said magnetic induction field being output by a transmitting device located at a distance from the heating layer (3).

8. Line according to Claim 1, further comprising at least one temperature sensor intended to be connected to control means for regulating the electrical current in the heating layer (3).

9. Line according to Claim 8, wherein the temperature sensor comprises an optical fiber suitable for measuring at least one temperature profile along the line in the longitudinal direction (X).

10. Line according to Claim 9, wherein the tube (2) is made of polymer material and the optical fiber is embedded in the tube (2).

11. Method for producing a line for the transport of a fluid containing a hydrocarbon, said line comprising a hollow tube (2) extending in a longitudinal direction (X) and intended for transporting said fluid in the tube, said tube (2) having at least one electrically insulating outer surface (2b), said method comprising at least the following successive steps:

    - formation of a heating layer (3) on the tube, said heating layer (3) comprising carbon fibers embedded in a polymer material,
- formation of an electrically insulating layer (4) on the heating layer (3), said electrically insulating layer (4) comprising an electrically insulating material,
- formation of a reinforcing layer (5) on the electrically insulating layer (4), said reinforcing layer (5) comprising a reinforcing filler embedded in a polymer material, said reinforcing layer (5) being suitable to stiffen the line, said reinforcing filler comprising carbon fibers, and
- placement of electrical power supply means (6) for bringing an electrical current to said heating layer (3), said electrical current flowing in said heating layer 3 to heat the tube (2).

12. Method according to Claim 11, wherein the formation of each layer (3, 4, 5) is achieved by:

- spirally applying at least one strip of appropriate composite around the previous layer, and
- heating that strip for a predetermined time to partially melt the polymer material of the strip so that it adheres to the preceding layer.

13. Method according to Claim 11, wherein the formed line is machined to make a groove (3a) with a beveled bottom in the heating layer (3), said groove (3a) being suitable to accommodate at least one connection element (6b) of a complementary shape.

EP 2 558 274 B1

FIG.1b.

FIG.2.

FIG.1a.

12

FIG.3.

FIG.4.

**EP 2 558 274 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 2800021 Y

- FR 2873952